(19) Europäisches Patentamt
European Patent Office
Office européen des brevets

(11) **EP 3 264 666 B1**

(12) **EUROPEAN PATENT SPECIFICATION**

(45) Date of publication and mention
of the grant of the patent:
**27.07.2022 Bulletin 2022/30**

(21) Application number: **16176716.5**

(22) Date of filing: **28.06.2016**

(51) International Patent Classification (IPC):
*H04L 9/00* *(2022.01)*

(52) Cooperative Patent Classification (CPC):
**H04L 9/003; H04L 9/0631**

(54) **A PROTECTION METHOD AND DEVICE AGAINST A SIDE-CHANNEL ANALYSIS**

SCHUTZVERFAHREN UND VORRICHTUNG GEGEN EINE SEITENKANALANALYSE

PROCÉDÉ ET DISPOSITIF DE PROTECTION CONTRE UNE ANALYSE DE CANAUX AUXILIAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.01.2018 Bulletin 2018/01**

(73) Proprietor: **ESHARD**
**33650 Martillac (FR)**

(72) Inventors:
• **WURCKER, Antoine**
**33140 Villenave D'ornon (FR)**
• **THIEBEAULD DE LA CROUEE, Hugues**
**33600 Pessac (FR)**

(74) Representative: **Marchand, André et al**
**OMNIPAT**
**24 Place des Martyrs de la Résistance**
**13100 Aix-en-Provence (FR)**

(56) References cited:
**US-A1- 2006 056 622    US-A1- 2009 074 181
US-A1- 2011 055 591**

• **Mohamed Karroumi ET AL: "Addition with
Blinded Operands", Constructive Side-Channel
Analysis and Secure Design (COSADE 2014), 14
April 2014 (2014-04-14), XP55506390, Cham ISBN:
978-3-319-10175-0 Retrieved from the Internet:
URL:http://link.springer.com/10.1007/978-3
-319-10175-0 [retrieved on 2018-09-12]**

## Description

TECHNICAL FIELD

The present invention relates to a method and device for protecting a circuit or a program against side channel analysis aiming to discover the value of a secret data handled by the circuit or program, and in particular a secret key used by an encryption or decryption algorithm to transform a message.

The present invention relates in particular to smart card integrated circuits or to hardware cryptographic components integrated onto mother boards of computers and other electronic and IT equipment (USB drives, TV decoders, game consoles, etc.) implementing a cryptographic algorithm such as AES (Advanced Encryption Standard). The present invention also relates to a program implementing such an algorithm, provided for being executed in a secure or non-secured environment.

More generally the present invention relates to circuits and software implementing an operation combining two data which are required to be kept hidden.

BACKGROUND

Circuits implementing cryptographic algorithms can comprise a central processing unit (CPU), and possibly a circuit dedicated to cryptographic computing, for example a cryptographic coprocessor. These circuits may comprise thousands of logic gates that switch differently according to the operations executed. These switching operations create short variations in current consumption, for example of a few nanoseconds, and those variations can be measured. In particular, CMOS-type integrated circuits comprise logic gates that only consume current when they switch, i.e. when a logic node changes its state to 1 or to 0. Therefore, the current consumption depends on the data handled by the central processing unit and on its various peripherals: memory, data flowing on the data or address bus, cryptographic coprocessor, etc.

Furthermore, certain software programs using encryption or obfuscation techniques, such as the White-box Cryptography technique, may integrate secret data in such a way that it is very difficult to determine them by reverse engineering. Certain software programs may also receive a secret data from outside through a secure communication channel.

Such circuits may be subjected to so-called side channel analysis attacks based on observing their current consumption, or their magnetic or electromagnetic radiation. Such attacks aim to discover the secret data, in particular encryption keys. Current side channel attacks implement statistical analysis methods such as SPA ("Single Power Analysis"), DPA ("Differential Power Analysis"), CPA ("Correlation Power Analysis") or EMA ("ElectroMagnetic Analysis"). The SPA analysis (ref. [1]) normally only requires the acquisition of a single current consumption trace. It aims to obtain information about the activity of the integrated circuit by observing the part of the consumption trace corresponding to a cryptographic computation, since the current trace varies according to the operations executed and the data handled.

Software may also undergo such side channel attacks during their execution by a circuit.

DPA (ref. [2]) and CPA analyses enable the key of an encryption algorithm to be found by acquiring numerous circuit consumption traces and by statistically analyzing these traces to find the target information. They are based on the premise that the consumption of a CMOS-type integrated circuit varies when a bit changes from 0 to 1 in a register or on a bus, and does not vary when a bit remains equal to 0, remains equal to 1 or changes from 1 to 0 (discharge of a stray capacitance of a MOS transistor). Alternatively, it can be considered that the consumption of a CMOS-type integrated circuit varies when a bit changes from 0 to 1 or changes from 1 to 0 and does not vary when a bit remains equal to 0 or remains equal to 1. This second hypothesis enables the conventional "Hamming distance" or "Hamming weight" functions to be used in order to develop a consumption model that does not require knowledge of the structure of the integrated circuit in order to be applicable. The DPA analysis involves amplifying this consumption difference thanks to statistical processing on numerous consumption traces, aiming to highlight a measurement difference between two families of consumption traces distinguished according to formulated hypotheses.

The CPA analysis (ref. [3]) is based on a linear current consumption model and involves computing a correlation coefficient between, firstly, the consumption points measured that form the captured consumption traces and, secondly, an estimated consumption value, computed from the linear consumption model and a hypothesis on the data to be discovered that is handled by the microcircuit and on the value of the encryption key.

The electromagnetic analysis (EMA) is based on the principle that an integrated circuit may send information in the form of near or far field electromagnetic radiation. Given that transistors and the wires connecting them emit electromagnetic signals when their state changes, these signals can be treated like the current consumption variation signals by an analysis such as one or other of the SPA, DPA and CPA analyses. An example of application of this analysis was made by Jean-Jacques Quisquater in 2001 (ref [4]).

Other side channel analyses exist, such as "Template analysis" (ref. [5]) and "Mutual Information Analysis" (MIA) (ref. [6]). All of the above-mentioned analyses are based on a time alignment of all the analyzed traces. In other words, all the measurements performed at a given time, for example from the time the execution of a command is activated by the circuit, must correspond to the same data handled by the algorithm.

The patent application N° FR16 51443 filed on February 22, 2016 by the Applicant discloses a method for analysing traces representative of the activity of a circuit when the latter executes an operation successively on different input data. This method comprises extracting a part of each trace, and generating a histogram from each extracted trace part, by counting an occurrence number of each possible value appearing in each of the extracted parts of these traces. Partial results of the operation are then computed by applying the operation to each input data and each possible value of a part of a secret key involved in the operation. Then, the method identifies for each possible part value of the secret key, all the input data which provide the same partial result. For each possible part value of the secret key, the occurrence numbers in the histograms, corresponding to the identified input data and the part value of the secret key are then added. The part of the secret key can be determined by subjecting the added occurrence numbers to a statistical analysis. The statistical analysis assumes that if a value related to the secret key has leaked in the extracted parts of the traces, it can be highlighted by the added occurrence numbers.

The patent application US 2006/056622 discloses a countermeasure for protecting an encryption algorithm by combining the data to be encrypted by an XOR type function with masks, and by applying the encryption algorithm to all masked data and the same key. The patent application US 2009/074181 discloses another countermeasure applying the AddRoundKey operation of AES to an input byte and each possible byte stored in a table including a requested cryptographic key byte. The results of the operation are stored in a table including all possible values of one byte, and the requested result. However, these countermeasures do not resist to the above analysis disclosed by the Applicant.

M. Karroumi et al: "Addition with Blinded Operands", discloses a method for protecting a modular addition operation from differential power analysis DPA and related attacks.

United States Patent Application Publication US2011/055591 discloses a uniform distribution of masking data.

It may be desirable to propose a protection for an integrated circuit or a software program against one or more of these side channel analyses.

SUMMARY

A method is described for executing by a circuit an operation whereby a first input data is combined with a second input data. The method comprises performing the operation on all the possible data pairs consisting of one data of a first input set and the second input data, the first input set comprising the first input data, each data in the first input set comprising at least one word, the words in the first input set having a same size and forming a first word subset comprising a single word from each data of the first input set and a same number of occurrences of all possible values of the words, the application of the operation to each data pair generating an output set comprising an output data resulting from the application of the operation to the first and second input data, and having a position in the output set, which is known from the circuit. According to the invention, the second input data belongs to a second input set, each data in the second input set comprising at least one word, the words in the second input set having a same size and forming a second word subset comprising a single word from each data of the second input set and a same number of occurrences of all possible values of the words, the operation being data pairs consisting of one data from the first input set and one data from the second input set, the output set comprising all data resulting from the application of the operation to one of the data pairs.

According to an embodiment, the data in the output set are arranged in rows and columns, the data of one row or column resulting from the application of the operation to a same one data of one of the first and second input sets and to each of the data in the other of the first and second input sets, the method comprising selecting a row or a column of the output set comprising the output data.

According to an embodiment, the output set is written in a memory area comprising two data lines, one of the two data lines comprising data resulting from the application of the operation to the first input data and to each of the data in the second input set, or resulting from the application of the operation to the second input data and to each of the data in the first input set.

According to an embodiment, the rows or columns of the output set are randomly or alternately written in the two data lines of the memory area, and when a row or column of the output set comprising the output data at a known position is written in one of the two data lines of the memory area, the other of the two data lines of the memory area receives all the data of the output set subsequently computed, the method comprising selecting as output of the operation the data line of the memory area comprising the output data, or the rows or columns of the output set are combined by XOR operations with previous data written in one of the two data lines of the memory area, except one row or column of the output set, which is written in the other of the two data lines of the memory area, an error being detected when the two data lines of the memory area are not identical.

According to an embodiment, the operation is an Exclusive OR.

According to an embodiment, the computations of the data in the output set are performed in a random order.

According to an embodiment, the method comprises detecting in a column or a row of the output set a data having a number of occurrences different from a number of occurrences of other data in the output set, an error being detected when two data with different numbers of occurrences are found in a column or a row of the output set.

According to an embodiment, the detection of two identical data in a row or column of the output set comprises combining by exclusive OR (XOR) operations all the data in the row or column of the output set, and comparing the result of the XOR operations with zero.

According to an embodiment, the first input set is generated by combining by Exclusive OR operations the first input data once with each possible values of a mask having a same bit number as the first input value.

According to an embodiment, the method comprises: concatenating a number of data of the first input set to generate a first input word, concatenating a same number of data of the second input set to generate a second input word, and applying the operation to the first and second input words.

Embodiments may also relate to a method for encrypting or decrypting an input data, comprising: applying Exclusive OR (XOR) operations to each byte of the input data and to a corresponding byte of a key derived from a secret key and providing for each byte of the input data a first output set of output bytes comprising a same number of occurrences of all possible values of a byte including the result of the operation applied to the byte of the input data, applying a substitution operation to each byte of each first output set, comprising selecting a byte in a substitution table as a function of the byte in the first output set, and providing for each first output set a second output set comprising all bytes selected in the substitution table as a function of a byte in the first output set, and applying to the second output sets a permutation operation comprising combining together by XOR operations bytes of the second output sets or multiples thereof, the XOR operations being performed according to the above-defined method.

According to an embodiment, the first output sets are generated by: generating an input set for each byte of the input data by combining by XOR operations the byte of the input data once with all possible values of a mask byte, and by combining each byte of the derived key by the XOR operations with each byte of a corresponding one in the input sets, or generating a key set for each byte of the derived key by combining by XOR operations the byte of the derived key once with all possible values of the mask byte, and by combining each byte of the input data by the XOR operations with each byte of a corresponding one in the key sets, or combining by XOR operations each byte of the input data with a corresponding byte of the derived key to generate output bytes, and by combining each output byte by XOR operations once with all possible values of the mask byte.

Embodiments may also relate to a circuit comprising a processor and configured to implement the above-defined methods.

According to an embodiment, the circuit comprises a coprocessor.

Embodiments may also relate to a device comprising a circuit as above-defined, arranged on a medium.

Embodiments may also relate to a computer program product loadable into a computer memory and comprising code portions which when executed by a computer configure the computer to carry out the steps of the above-defined methods.


BRIEF DESCRIPTION OF THE DRAWINGS

The method and/or device may be better understood with reference to the following drawings and description. Non-limiting and non-exhaustive descriptions are described with the following drawings. In the figures, like referenced signs may refer to like parts throughout the different figures unless otherwise specified.

Figure 1 represents a conventional architecture of a secure circuit;
Figure 2 represents steps of an operation, including protection steps according to one embodiment;
Figure 3 is a block diagram illustrating protection steps according to one embodiment;
Figures 4 to 6 are block diagrams illustrating other protection steps, according to different embodiments;
Figure 7 is a block diagram of the AES encryption algorithm, including protection steps according to one embodiment;
Figure 8 is a block diagram of the mix column operation in the AES encryption algorithm,
Figure 9 is a block diagram of the mix column operation in the AES encryption algorithm, including protection steps according to one embodiment;
Figure 10 represents a secure circuit, according to one embodiment.


DETAILED DESCRIPTION

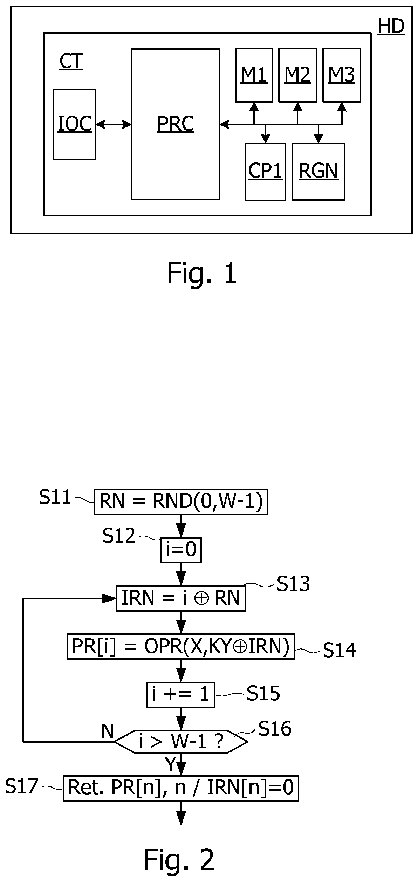

Figure 1 represents, as an example, a secure integrated circuit CT, for example arranged on a portable medium HD such as a plastic card or any other medium, or in a terminal such as a mobile terminal. The integrated circuit comprises a microprocessor PRC, an input/output circuit IOC, memories M1, M2, M3 coupled to the microprocessor by a data and address bus and, optionally, a cryptographic computation coprocessor CP1 or arithmetic accelerator, and a random number generator RGN. The memories can comprise a volatile memory M1, for example a RAM-type ("Random Access Memory") memory containing volatile application data, a non-volatile memory M2, for example an EEPROM or Flash memory, containing non-volatile data and application programs, and possibly a read-only memory M3 (or ROM memory) containing the operating system of the microprocessor. The operating system can also be stored in the non-volatile memory.

The communication interface circuit IOC may be of contact type, for example according to the ISO/IEC 7816 standard, of contactless type with inductive coupling, for example according to the ISO/IEC 14443A/B or ISO/IEC 13693 standard, of contactless type by electrical coupling (UHF interface circuit), or of both contact and contactless type. The interface circuit IOC may also be coupled through a specific interface, to another circuit such as an NFC controller, or a main circuit of a terminal such as a mobile terminal or a connected object.

In some embodiments, the integrated circuit CT may be configured to execute operations of encrypting, decrypting or signing messages that are sent to it, by means of a cryptographic function. This cryptographic function may be executed by the processor PRC of the circuit CT or partially or totally carried out by the processor PRC to the coprocessor CP1.

It is proposed here to protect an operation, e.g. an operation which may be part of a cryptographic algorithm against side channel analysis. In this context, the operation receives an input data, and provides an output data as a function of the value of the input data. A protection according to one embodiment involves executing the operation to be protected for all the data of an input set of data, each data in the input set comprising at least one word, the words in the input set having a same size and forming a word subset comprising a same number of occurrences of all possible values of one word in relation with the word size. Thus the input set comprises the input data required to be processed by the operation. Another protection involves providing as a result of the operation an output set of data in which each data comprises at least one word, the words in the output set having a same size and forming a word subset comprising the same number of occurrences of all possible values of one word in relation the word size.

The set of input data may be obtained by combining the required input data X by a logical XOR (Exclusive OR) operation with a mask $M_i$ comprising for example a value equal to i representing a byte having all possible values of one byte (between 0 and 255). Thus if the input data X has the size of one byte, the set of input data comprises 256 data equal to $X \oplus M_i$ where $M_i = 0$ to 255, and the required input data $X = XV_n = X \oplus M_n$, with $M_n = 0$ ("$\oplus$" representing the XOR operator applied to bytes). When the input data is encoded on one byte, an operation can be protected according to one embodiment by applying the operation to all the data in the input set comprising the data $XV_i = X \oplus M_i$, with i = 0 to 255, i.e. all possible data having the size of one byte. The computations of the output data in the output set may be performed in a random order. To this purpose, the data in the input set can be arranged in a random order.

Unlike the protections of prior art involving hiding the operation to be protected in a flood of identical operations applied to random data and thus uncorrelated from the required input data of the operation to be protected, the idea here is to execute the operation on other data not chosen randomly. Indeed, such other data are correlated to the required input data insofar as the input set formed of such other data and of the required data to be processed is such that each data in the input set comprises at least one word, the words in the input set having the same size and forming a word subset or column comprising a single word from each data in the input set and a same number of occurrences of all possible values of one word in relation the word size. In the following, "word" designates a group of bits in a data, and "word column" designates a subset in a data set comprising a single word from all data in the data set, all the words in the word column having the same size. The words forming a word column are not necessary aligned, i.e. do not necessary comprises the same bit positions in the data of the data set. The input data to be processed by the operation may have an unpredictable position in the input set, but known by the circuit performing the operation.

Figure 2 represents steps S11 to S17 of a method for computing an operation OPR to be protected, which involves a secret data KY, according to one embodiment. Steps S11 to S16 are first executed successively. In step S11, a variable RN receives a random value between 0 and a maximum value W-1 determined according to the size defined by the number of bits used to encode this variable in binary code. Therefore, for a variable RN encoded on b bits, the maximum value W equals $2^b$. If the variable RN is encoded on 8 bits, the value W equals 256, and if the variable RN is encoded on 16 bits, the value W equals 65536. In step S12, an index i is set to 0. In step S13, a variable IRN (= $i \oplus RN$) is computed by combining the index i with the variable RN by an XOR operation. In step S14, one output data PR[i] designated by the index i in a result table PR, is computed by applying the operation OPR as defined above, to an input data X, and to the secret data KY. According to one embodiment, the secret data KY is here combined for example by an XOR operation with the variable IRN:

$$PR[i] = OPR(X, KY \oplus IRN). \qquad (1)$$

Alternatively, the variable IRN may be combined with the input data X:

$$PR[i] = OPR(X \oplus IRN, KY) \qquad\qquad (2)$$

or with the result of the operation OPR:

$$PR[i] = OPR(X, KY) \oplus IRN \qquad\qquad (3)$$

In step S15, the index i is incremented by one (1). In step S16, the index i is compared with the maximum value W, and if it is lower than the value W, a new iteration of the calculation is executed in steps S13 to S16. In the opposite case, step S17 is executed. In step S17, the table PR is provided as the result of the operation OPR, the expected output data being in the table PR at an index i=n, the index n having a value such that the variable IRN = $n \oplus RN = 0$, i.e. $n = RN$, if the combination operation with the value IRN in step S14 is a XOR operation. Indeed, the result of the XOR operation applied to data D and 0 does not transform the data D.

It shall be noted that values of the variable IRN can be processed in a random order and not necessarily in the order from $0 \oplus RN$ to $(W-1) \oplus RN$. Further, the expected output data OPR(X,KY) in the table PR can be extracted, in step S17, only after other operations are applied to the data in the output table PR. In this case, all the data stored in the table PR can be processed by such other operations. Therefore, in the example of the AES algorithm, the operation OPR is for example the XOR operation combining an input data to encrypt with a first derived key used in a first round of the algorithm. The following operations of the AES algorithm can be executed on all the data stored in the table PR, and the successive results of these operations stored in the table PR. Therefore, the operations of shifting rows can be applied to each element of the table PR. The expected output data can be extracted from the result table PR at a subsequent step in the processing.

Further, the input data X and the secret data KY are encoded on respective binary words having the same number of bits. Each value given to the variable IRN has the same number of bits as the data X and KY. If the data X and KY are encoded on one byte (8-bit words), the variable IRN is also encoded on 8 bits. The number of iterations W that must be executed between steps S13 to S16 is equal to $2^b$, b being the size in number of bits of the data M and X. If the data M and X are encoded on one word of 16, 32 or 64 bits, it may be desirable to limit this number of iterations.

If the operation is performed byte per byte, the variable IRN may be encoded on 8 bits, and the operations of combining the secret data KY or the input data X with the variable IRN can be performed by concatenating the variable IRN with itself several times to form a word of the size of the secret data KY and of the input data X. Therefore, in the event that the data X and KY are encoded on 16 bits, the variable IRN on 8 bits can be concatenated with itself to obtain a word on 16 bits. The operation executed in step S14 then becomes:

$$PR[i] = OPR(X, KY \oplus IRN//IRN), \qquad\qquad (4)$$

"//" representing the concatenation operator of binary words.

In the event that the data X and KY are encoded on 32 bits, each value of the variable IRN on 8 bits is concatenated with itself 3 times to obtain a word on 32 bits. The operation executed in step S14 then becomes:

$$PR[i] = OPR(X, KY \oplus IRN//IRN//IRN//IRN). \qquad\qquad (5)$$

In fact, the variable IRN used as a mask can have the size of the smallest word processed by the algorithm in which the operation OPR is performed.

In addition, the concatenated values of IRN can be different from each other:

$$PR[i] = OPR(X, KY \oplus IRN1//IRN2//IRN3//IRN4). \qquad\qquad (6)$$

provided that the indexes where IRNj = 0 (j = 1, 2, 3, 4) are stored.

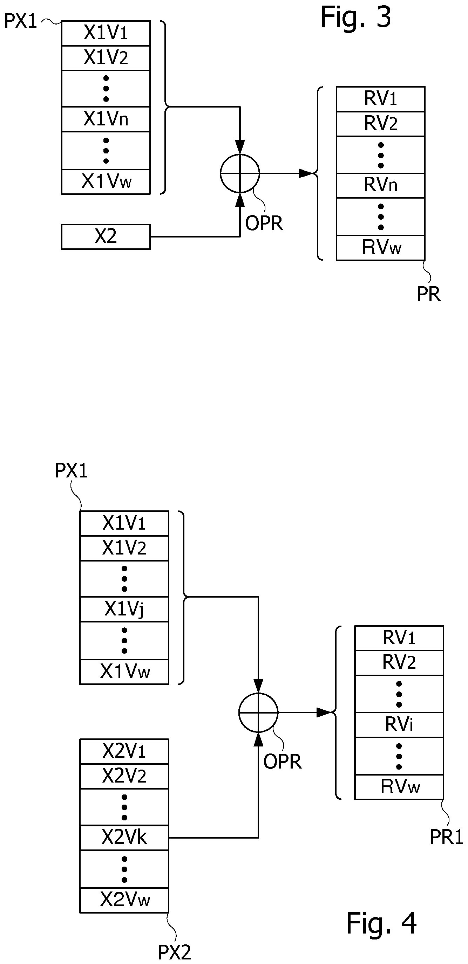

Figure 3 illustrates the application of an operation such as XOR to a protected data X1 and a non-protected data X2, the data X1, X2 having the size of one or several bytes. Thus the data X1 is represented by an input set PX1 comprising data X1V1, X1V2, ... X1Vw, each of these data having the same size as the input data X1, with w = $2^b$ where b is the size of the input data. The required data X1 is at index n in the input set PX1: X1 = X1Vn, n being an integer number between 1 and w. The result of the operation is an output set PR comprising w distinct output data RV1, RV2, ... RVw, wherein each data RVj equals $X1Vj \oplus X2$. The expected result of the operation RVn (= $X1Vn \oplus X2 = X1 \oplus X2$) is

at the same index n in table PR as the required input data X1 in the table PX1. As comprising w distinct data between 0 and w-1 (as the input set PX1), the resulting output set PR provides the same level of protection of the expected result RVn as the input set PX1.

Problems may arise when two protected data X1, X2 used in a cryptographic algorithm are combined by an operation such as XOR, the data X1, X2 being protected by being replaced by input sets of data PX1, PX2, each word in each word column in each input set having the same number of occurrences. Each of the input sets PX1, PX2 can also comprise all possible data depending on the size of the input data X1, X2, or a part thereof defined by applying a set of masks in the form of Mi//... //Mi, with Mi = 0, ... (w-1), Mi having the size of a word, when the input data are processed word by word. Figure 4 represents the sets of input data PX1, PX2. The input set PX1 comprises the data X1V1, ... X1Vw, the required input data X1 (= X1Vn) being at the index n. In a same way, the input set PX2 comprises the data X2V1, ... X2Vw, the required input data X2 (= X2Vn) being at the same index n.

The input sets PX1 and PX2 are generated by applying different mask values to the required input data X1 and X2:

$$X1Vj = X1 \oplus M1j,$$

for all values of the index j in {1, ..., w}, and

$$X2Vj = X2 \oplus M2j,$$

for all values of the index j in {1, ..., w}.

Thus, as an example first way to protect the operation (X1 ⊕ X2) is by computing (X1Vj ⊕ X2Vj) for all values of the index j between 1 and w:

$$(X1 \oplus M1j) \oplus (X2 \oplus M2j) = (X1 \oplus X2) \oplus (M1j \oplus M2j).$$

In fact, it cannot be ensured that the data M1j⊕M2j are different from one another for each value of the index j. It may occur that M1j = M2k and M1k = M2j for particular values of indexes j and k, leading to a set of masking values M1j⊕M2j comprising two identical values M1j⊕M2k = M1k⊕M2j. Thus each word column of the output set PR does not satisfy the condition of comprising all possible word values (between 0 and (w-1) when X1 and X2 represent bytes). In an extreme case, M1j and M2j have the same value for each index value j. Therefore:

$$(X1 \oplus M1j) \oplus (X2 \oplus M2j) = (X1 \oplus X2) \oplus 0 = X1 \oplus X2.$$

As a result, each of the w computations returns the same result X1⊕X2 which is the expected output result. Not only the expected result is not protected, but also this solution generates a heavy leakage on the expected result since the operation to be protected is performed w times.

Another way to generate protected output data could be to select one data in one of the input sets PX1, PX2 and to apply the operation to this selected data and to all the data of the other set of input data. As illustrated in Figure 4, the data X2Vk is selected in the set PX2 and combined with all the data in the input set PX1. Thus each resulting data RVj in the output set PR1 is computed as follows:

RVj = X1Vj⊕X2Vk, with j = 1, 2, ... w, and k having a fixed value. By doing this, it is ensured that the output set PR1 does not comprise two identical data RVi:

$$X1Vj \oplus X2Vk = (X1 \oplus M1j) \oplus (X2 \oplus M2k) = (X1 \oplus X2) \oplus M1j \oplus M2k.$$

in which M1j⊕M2k is different from M1j'⊕M2k if M1j is different from M1j'. However, the computation of the result data RVj in the output data PR1 requires reading a single data X2Vk in the data set PX2, whereas all the data in the input set PX1 are read. In some circumstances, such an unbalanced processing could generate leakages enabling the disclosure of the data X2Vk. If the chosen data X2Vk is equal to the required input data X2 (= X2Vn), then the leakage may enable the disclosure of the value of the data X2. If another data X2Vk (k ≠ n) in the set PX2 is chosen to be combined with all the data X1Vj of the set PX1, it is necessary to store the value of the mask Mk such that the chosen data X2Vk = X2⊕M2k.

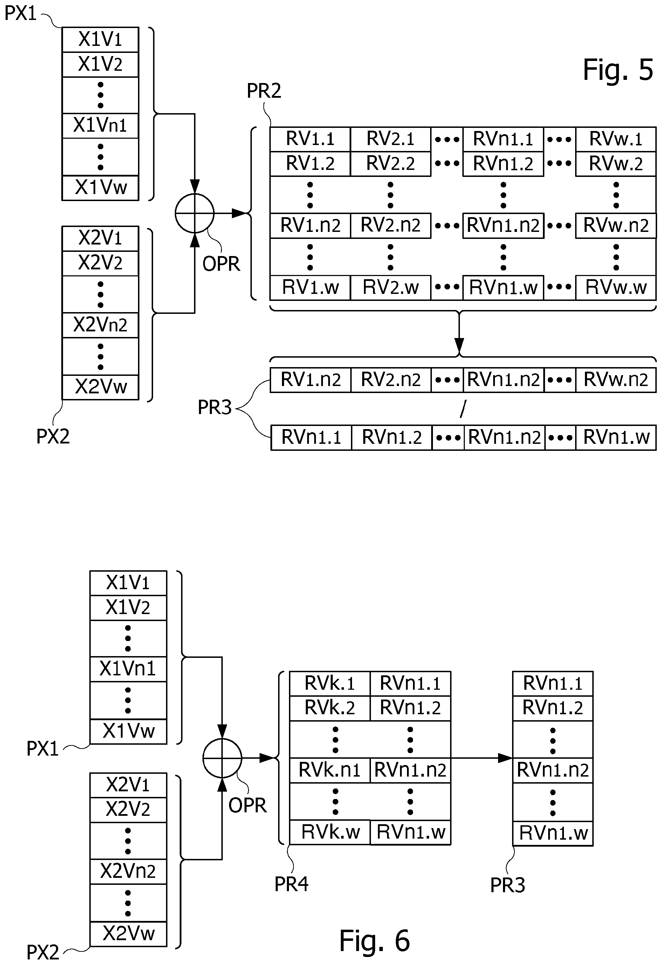

Another way to generate a protected output data, according to one embodiment, is illustrated in Figure 5. In Figure 5, an output set PR2 of the operation X1⊕X2 comprises w x w elements RVi.j, such that:

$$RVi.j = X1Vi \oplus X2Vj$$

with i and j having each all possible integer values between 1 and w.

According to one embodiment, the computation of the output data RVi.j in the output set PR2 is performed in a random order.

According to one embodiment, a reduced output set PR3 is formed from the output set PR2 without altering the protection of the expected output data X1⊕X2, by extracting from the output set PR2 a row J or column I of data RVJ.i or RVj.I in the same order. The position of the output data X1⊕X2 in the reduced output set PR3 or the value of the mask M1J or M2I may be stored in order to determine the value of the expected output data.

According to one embodiment, the required input data X1, X2 can be located in the input sets PX1, PX2 at respective indexes n1, n2. Thus in the example of Figure 5, the expected result is located in the row n2 and in the column n1 of the output set PR2:

$$X1 \oplus X2 = X1Vn1 \oplus X2Vn2 = RVn1.n2.$$

The reduced output set PR3 may be formed by extracting from the output set PR2 all the data of the row n2 or the column n1 in the same order. It may be observed that this extraction does not alter the protection of the expected output data X1⊕X2 since the extracted set comprises all data between 0 and $2^b$ - 1 where b is the size of the input data X1, X2. The indexes n1 and n2 may be chosen equal.

According to one embodiment illustrated in Figure 6, a memory PR4 where the data RVi.j of the output set PR2 are written as they are computed only comprises two rows or two columns with w data. The computed data RVi.j are written in the memory PR4 such that at the end of the computation, a first one of the two rows or columns equals the row or column of index n of the set PR2, and the other row or column equals another row or column k of the set PR2, for example the last computed row or column (of index w). In case of a computation column by column, the computed columns of data RVi.1 ... RVi.w from i = 1 to n1 or n2, are written alternately or randomly in the two columns of memory PR4 or in the same column, and from i = n1+1 (resp. n2+1) to w, the computed columns of data RVi.1 ... RVi.w are always written in the column of memory PR4 which does not comprise the data RVn.1 ... RVn.w. At the end of the computation, the column comprising the expected output data RVn1.n2 is extracted from the memory PR4 to obtain the output set PR3.

It could be also observed that if the circuit performing the operation OPR undergoes an error such as one caused by a successful fault injection, the value of at least one data in the output set PR, PR1, PR2, PR3, PR4 is changed. If only one data is changed, the output table (or a column or a row) no longer comprises all possible values of the output data and comprises two identical data, the data having a changed value having necessarily the value of another data in the output set. Thus, such a fault injection can be detected by a same value. More generally, a fault injection can be detected looking for two data in the output set, or in a row or column of the output set, having different numbers of occurrences. If two data are changed, the fault injection would fail to be detected only when the values of these two data are swapped, which has a very low probability of occurrence. Thanks to the property of the XOR operation, an error can be easily detected by combining together by XOR operations all the data in the output set (or in a row or column of the output set), the result of this combination being equal to zero when each word column of the output set comprises all possible values of the output data with the same number of occurrences in relation with the size of the processed words to compute the output data.

According to one embodiment, each of the computed columns (or rows) of data RVi.1 ... RVi.w is added (XOR) with a previously written column (resp. row) in one column of the memory PR4, except one computed column (or row) of data which is written in the other column of the memory PR4. Thus, thanks to the property of the XOR operation, the two columns of the memory PR4 must be equal unless an error occurred during the computation of the output data.

According to an embodiment, the input data X1, X2 have different sizes. Thus the input sets PX1 and PX2 comprise different numbers of data, noted w1 and w2. Therefore the computed output set PR2 comprises w1 x w2 output data. Then the extracted output set PR3 can be the row or column of the output set PR2 comprising the greatest amount of data including the output data X1⊕X2.

In another embodiment, the numbers of occurrences of the data in the input sets PX1, PX2 are chosen such that the latter comprise the same number w of data. In this way, the output set PR2 comprises w x w data.

Again, the data X1, X2 in the above description of Figures 3 to 6 can be encoded in one single byte, or in several bytes. In case of a single byte, w equals 256. In case of several bytes and when the operation is performed byte per byte, the masks Mj applied to the data X1, X2 to generate the input sets PX1, PX2 may be chosen to have the form IRN//IRN (IRN being encoded on one byte) when the data X1, X2 are encoded on two bytes, or IRN//IRN//IRN//IRN when the data X1, X2 are encoded on four bytes, or more generally IRN//IRN// ... //IRN when the data X1, X2 are encoded on more than four bytes.

According to one embodiment, several words may be computed at the same time in a hardware architecture comprising wider buses than the size of the data to be processed by the operation, such as 32-bit or 64-bit since XOR operations are bitwise. In a 32-bit architecture, four bytes of the output data RVi.j may be computed at the same time, and in a 64-bit architecture, eight bytes RVi.j may be computed at the same time. In this case, the masks applied to the input data to generate the input data sets may also have the form IRN//IRN// ... //IRN, IRN being encoded on one byte.

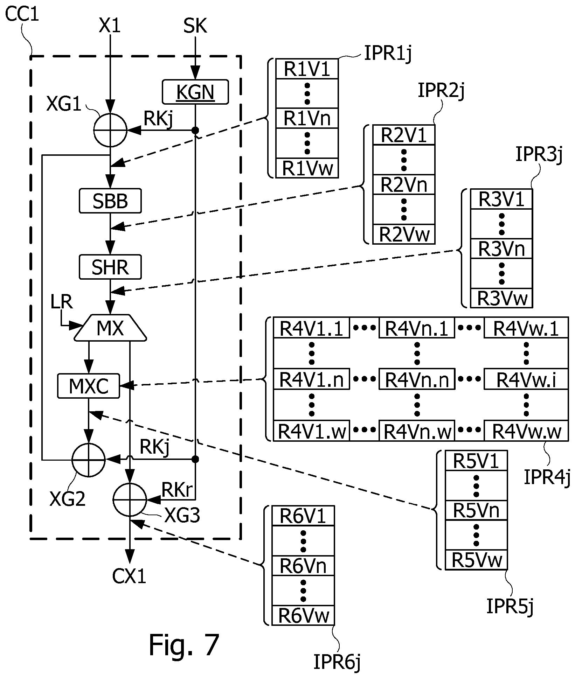

All the operations performed in the AES (Advanced Encryption Standard) algorithm either implemented by software or in hardware can be protected using the method previously disclosed. Figure 7 represents an example of a cryptographic calculation circuit CC1 implementing the AES algorithm for encrypting a data. For further details about the AES, the document "Advanced Encryption Standard FIPS PUB 197" published on 26th November 2001 can be referred to. In Figure 7, the cryptographic calculation circuit CC1 receives a data X1 to be encrypted and supplies an encrypted data CX1. The circuit CC1 comprises circuits XG1, XG2, XG3 performing XOR operations, a substitute calculation circuit SBB, a row-based circular permutation calculation circuit SHR, a column-based permutation calculation circuit MXC, a multiplexer MX and a key generator KGN. The circuits SBB, SHR, MXC and KGN are compliant with the AES. The circuit XG1 receives the data X1 to be encrypted and at a key input a first derived key RK0 generated by the key generator KGN from a secret key SK. The output of the circuit XG1 is supplied to the circuit SBB. One output of the circuit SBB is supplied to the circuit SHR. One output of the circuit SHR is supplied via the multiplexer MX either to the circuit MXC or to an input of the circuit XG3 receiving at a key input a last derived key RKn supplied by the key generator KGN. One output of the circuit MXC is connected to an input of the circuit XG2 receiving at a key input a derived key RKj (j = 1, ..., r-1) supplied by the key generator KGN. One output of the circuit XG2 is connected to the input of the circuit SBB. At a last round r, when a certain number (r-1) of calculation rounds have been performed (10, 12 or 14, in accordance with AES) by the chain comprising the circuits SBB, SHR, MXC, and XG2, the multiplexer MX is actuated to provide the output of the circuit SHR to the circuit XG3 which supplies the output data CX1.

During a first calculation round, the data X1 is processed by the circuit XG1 which adds (XOR) to it the first derived key RK0 generated by the circuit KGN from the secret key SK. At each round j, the key generator KGN derives a new key RKj. The circuit XG1 provides the resulting data X1⊕RK0 which is processed successively by the circuits SBB, SHR, MXC and XG2. Then the circuit XG2 combines the data provided by the circuit MXC with the derived key RKj (j = 0, ..., r-1). The circuits SBB, SHR MXC and XG1 are successively activated for several rounds of the AES algorithm. The substitute calculation circuit SBB is generally implemented using a substitution table.

According to one embodiment, the operation performed by the circuit XG1 is realized by executing the steps S11 to S17 of Figure 2, each of the 16 bytes of the input data X1 being combined with a respective byte of the key RK0 derived from the secret key SK by the key generator KGN for a first round (j=0) of the AES algorithm. The operation OPR in step S14 performed W (=256) times is a logical XOR operation involving a byte of the input data X1 and a byte of the key RK0. The step S14 may implement one of the equations (1) to (3) or may be derived from these equations by applying equations (4) or (5) depending on the size of the data that the circuit CC1 is able to process. Thus the result provided by the circuit XG1 comprises tables IPR1j (with j=0), each comprising words R1V1 to R1Vw and in particular a word R1Vn (with n between 1 and w) equal to a word of the output data X1⊕ RK0. If one of the equations (1) to (3) is applied alone, the operation XG1 is applied to each byte of the input data X1 and RK0, and provides a table IPR10 for each of these bytes, the data R1V1 to R1Vw being bytes. If one of the equations (1) to (3) is applied in combination with equation (4) or (5), the operation XG1 is applied to each word of two or four bytes in the input data XG1 and RK0 and provides a table IPR10 of words of the same size for each of these words. An extension of equation (5) can be applied for processing at the same time more than four bytes of the input data to obtain a table comprising w words of the same size as the processed words of the input data X1. The rank n of each of the output words of the expected result X1⊕ RK0 in each of the output tables IPR10 can be different for each output table. Thus, for example step S11 can be performed for each output table IPR10.

The result provided by the circuit SBB is a table IPR2j (with j=0 at the first round), comprising data R2V1 to R2Vw and a data R2Vn (with n between 1 and w), equal to SBX[X1⊕RK0] at the first round, SBX being a substitution table implementing the substitution operation of AES. Generally the circuits SBB and SHR process the input data X1⊕RK0 byte per byte. In the present case, each byte R1V1 to R1Vw in each byte table IPR10 is processed by the circuit SBB which provides the table IPR20. If each of the data R1V1 to R1Vw represents more than one byte, each byte in the table IPR10 is processed separately by the circuits SBB and SHR. The circuit SHR processes the tables IPR20 and provides tables IRPR30.

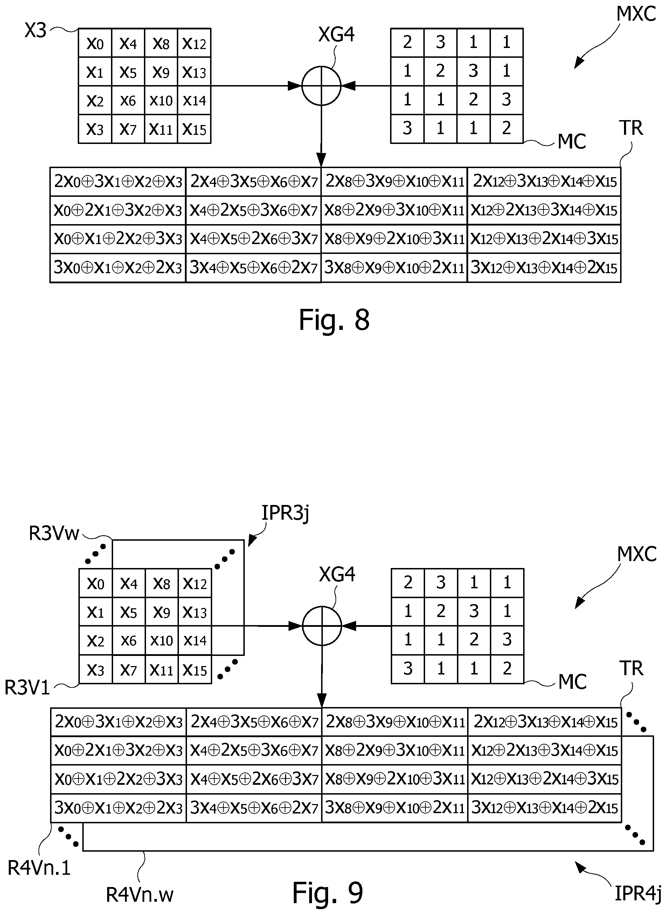

Figure 8 represents the circuit MXC. The circuit MXC combines the output data X3 of the circuit SHR with a coefficient matrix MC of 4x4 elements. To this purpose, the output data X3 is organized into a matrix format of 4x4 elements x0 to x15, each of these elements representing one bytes of the data X3 which is encoded on 128 bits. The elements of the matrix X3 are combined together by a XOR operator and with the elements of the matrix MC to produce a resultant matrix TR of 4x4 elements, where each element has the following form:

$$a \cdot x<i> \oplus b \cdot x<i+1> \oplus c \cdot x<i+2> \oplus d \cdot x<i+3>$$

where a, b, c, d (= 1, 2 or 3) are the elements of one line of the matrix MC and i is equal to 0, 4, 8 and 12. According to AES, the operation 2·x is performed by using the operation LS1(x) if x is lower than 128 when the most significant bit (MSB) of x equals 0 and the operation LS1(x)⊕0x1B when the MSB of x equals 1, LS1 representing a shift to the left by one bit in the byte x. The operation 3·x is performed using the operation 2-x⊕x.

Since each byte of the data X3 is represented by one table IPR3j, the circuit MXC performs 3x16 XOR operations for each byte of each table IPR3j, each XOR operation combining two input tables as in the cases of Figures 4 to 6. One more XOR operation may be necessary to perform the operation 3·x. However in some implementations of AES algorithm, the operations 2·x and 3·x are implemented by lookup tables.

According to one embodiment illustrated in Figure 9, each XOR operation for computing an element of the matrix TR as disclosed in Figure 8 is performed according to the process illustrated by Figure 5 or 6 to provide a table similar to the table PR2 or PR4 and then to the table PR3, and each multiplication by 2 is performed according to the process illustrated by Figure 3. After each XOR operation between two input tables IPR30 or between a XOR resulting table IPR40 and another table IPR30, a row or column n including the expected output data at a known rank is selected in a resulting table IPR40 for a next XOR operation to compute the form a·x<i>⊕b·x<i+1> ⊕c·x<i+2>⊕d·x<i+3>. Finally, the computations performed by the circuit MXC provide, at the first round (j=0), a table IPR40 comprising w × w bytes (or 2w bytes according to Figure 6) R3Vi.k for each byte of the input data X1. Then a table IPR50 of w bytes R5Vi (= R4Vi.n or R4Vn.i) is extracted from each table IPR40. The row or column n where the expected output data is located at a known rank may be the same or different for each column of the tables IPR40.

At a second round (j=1), the circuit XG2 combines each of the data R5Vi (i =1, ... w) in each table IPR50 with a derived key RK1 provided by the circuit KGN, and thus provides a result table IPR11 comprising the data R1Vi (i =1, ... w), to the circuit SBB. Then several rounds are performed until a table IPR3r is provided by the circuit SHR in a last round (j=r). Then the circuit XG3 combines each word of each table IPR3r with a last derived key RKr. Finally, the circuit XG3 provides a result table IPR6r for each word (of 8, 16 or 32 bits) in the input data X1, each table IPR6r comprising words R6V1, ... R6Vw, and more particularly, a word R6Vn of the expected output data CX1. It should be noted that if the words of the data X1⊕RK0 are located at rank n in the tables IPR10, the words R6Vn of the expected output data CX1 are located at the same rank n in the tables IPR6r. According to an embodiment, the circuit XG3 is configured to provide the data CX1 alone.

The position of the circuits SBB and SHR can be reversed, the a row-based circular permutation calculation performed by the circuit SHR being applied to the data in the table IPR1j before performing the substitute calculation performed by the circuit SBB,

The decryption algorithm according to AES comprises substantially the same operations as the encryption algorithm. Therefore, the previously described method for protecting an operation combining one protected data having the form of the table PX1 with another data, either protected or not, can be applied to protect a program and a circuit implementing the AES decryption algorithm. More particularly, an AES decryption circuit comprises circuits performing XOR operations with keys derived from the secret key SK, an inverse substitute calculation circuit, an inverse row-based circular permutation calculation circuit, an inverse column-based permutation calculation circuit, and the key generator KGN for generating the derived keys from the secret key SK. The method illustrated in Figure 3 can be applied to each operation performed by the XOR operations with derived keys, and each operation performed by the inverse substitute calculation circuit, and inverse row-based circular permutation calculation circuit. The method illustrated in Figure 5 or 6 can be applied to each XOR operation performed by the inverse column-based permutation calculation circuit.

It should be noted that the protection method previously disclosed may be applied only to some operations performed in the AES algorithm which would be considered as vulnerable to side channel analysis. For example, the protection method can be applied only to the first and last rounds of the AES algorithm, from which sensitive data could leak.

More generally, the protection method previously disclosed can be applied to other encryption algorithms, implemented by software and/or by hardware, and comprising XOR operations combining sensitive data, such as ARIA (ref. [7]). The ARIA algorithm processes 128-bit data byte per byte and is performed by round, each round comprising a round key addition by a XOR operation, a substitution step using two precomputed substitution tables and their inverses and a diffusion step. The substitution step processes byte per byte the input data combined with the round key, and the diffusion step applies 16 different XOR combinations to the 16 bytes of the data provided by the substitution step. In each of these combinations, seven bytes of the data are added by XOR operations.

According to an embodiment, each byte XOR operation performed in the round key addition and each by substitution operation performed in the substitution step are protected by the process illustrated in Figures 2 and 3, and each of the XOR operations performed in the diffusion step are protected by the process illustrated Figure 5 or 6.

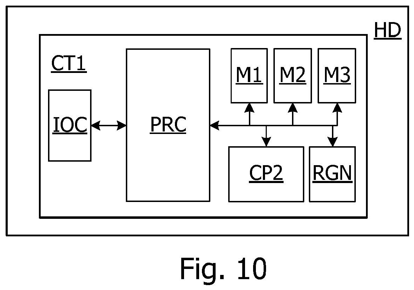

Figure 10 represents an integrated circuit CT1 arranged on a portable medium HD such as a plastic card, and implementing one of the protection methods previously described, according to one embodiment. The integrated circuit comprises the same units as the integrated circuit CT described above in connection with Figure 1, and differs from the latter in that the coprocessor CP1 is replaced with a coprocessor CP2 implementing one and/or the other protection methods described above. Therefore, according to one embodiment, the coprocessor CP2 is configured to provide output tables of resulting data, rather than a single data of a cryptographic operation, each output table including the expected result of the cryptographic operation, the output table being such that all computed words in the word columns in the output table have the same number of occurrences. The processor PRC is matched with the coprocessor CP2 so as to know the location of the result of the cryptographic operation in the table of resulting values provided by the coprocessor CP2.

The coprocessor CP2 may also be configured to execute a part of the cryptographic operation. In this case, the processor PRC is configured to produce output tables of resulting data including the result of the cryptographic operation, each output table being such that all computed words in the word columns therein have the same number of occurrences.

The methods disclosed herein may also be implemented by software programs executable by a computer system. Further, implementations may include distributed processing and parallel processing, especially for processing in parallel several or all data in the input data sets and/or for providing in parallel several or all data in the output data sets.

The illustrations described herein are intended to provide a general understanding of the structure of various embodiments. These illustrations are not intended to serve as a complete description of all of the elements and features of apparatus, processors and systems that utilizes the structures or methods described therein. Many other embodiments or combinations thereof may be apparent to those of ordinary skills in the art upon reviewing the disclosure by combining the disclosed embodiments. Other embodiments may be utilized and derived from the disclosure, such that structural and logical substitutions and changes may be made without departing from the scope of the disclosure.

Further, the disclosure and the illustrations are to be considered as illustrative rather than restrictive. The scope of protection is defined by the subject matter of the independent claims. Thus, the scope of the following claims is to be determined by the broadest permissible interpretation of the claims and their equivalents, and shall not be restricted or limited by the foregoing description.

The previous examples illustrated in Figures 3 to 6, can be applied to other operations than XOR, provided that these operations are performed bitwise and are reversible or bijective.

References cited

[1] P. C. Kocher, "Timing attacks on implementations of Diffie-Hellman, RSA, DSS, and other systems" In Neal Koblitz, editor, Advances in Cryptology - CRYPTO '96, volume 1109 of Lecture Notes in Computer Science, p. 104-113. Springer, 1996.

[2] P. C. Kocher, J. Jaffe, and B. Jun, "Differential Power Analysis" In M. J. Wiener, editor, Advances in Cryptology - CRYPTO '99, volume 1666 of Lecture Notes in Computer Science, p. 388-397. Springer, 1999.

[3] E. Brier, C. Clavier, and F. Olivier, "Correlation Power Analysis with a Leakage Model" In M. Joye and J-J. Quisquater, editors, Cryptographic Hardware and Embedded Systems - CHES 2004, volume 3156 of Lecture Notes in Computer Science, p. 16-29. Springer, 2004.

[4] J.-J. Quisquater, "ElectroMagnetic Analysis (EMA): Measures and Counter-measures for Smart Cards", Smart Card Programming and Security, Springer Berlin / Heidelberg, vol. 2140, 2001, p. 200-210

[5] S. Chari, J. R. Rao, and P. Rohatgi, "Template Attacks", Kaliski Jr., B.S., Koç, Ç.K., Paar, C. (eds.) CHES 2002. LNCS, vol. 2523, p. 172-186. Springer, Heidelberg (2003)

[6] B. Gierlichs, L. Batina, P. Tuyls, and B. Preneel, "Mutual Information Analysis", CHES 2008, volume 5154 of LNCS, p. 426-442, Springer, 2008

[7] Daesung Kwon et al., "New Block Cipher: ARIA", Information Security and Cryptology - ICISC 2003, Volume 2971 of the series Lecture Notes in Computer Science p. 432-445

**Claims**

1. A method for executing by a circuit (CT1) an operation (OPR) whereby a first input data (X1Vn1) is combined with a second input data (X2Vn2), the method comprising:

   performing the operation on all of the possible data pairs (X1Vi-X2Vj) consisting of one data (X1V1-X1Vw) of a first input set (PX1) and the second input data, the first input set (PX1) comprising the first input data (X1Vn1), each data in the first input set comprising at least one word, the words in the first input set having a same size and forming a first word subset comprising a single word from each data of the first input set and a same number of occurrences of all possible values of the words, the application of the operation to each data pair generating an output set comprising an output data (RVn1.n2) resulting from the application of the operation to the first and second input data, and having a position in the output set, which is known from the circuit,
   wherein the second input data (X2Vn2) belongs to a second input set (PX2), each data in the second input set comprising at least one word, the words in the second input set having a same size and forming a second word subset comprising a single word from each data of the second input set and a same number of occurrences of all possible values of the words, the operation being performed on all of the possible data pairs consisting of one data from the first input set and one data from the second input set, the output set (PR2) comprising all data (RV1.1-RVw.w) resulting from the application of the operation to one of the data pairs.

2. The method of claim 1, wherein the data in the output set (PR2) are arranged in rows and columns, the data of one row or column resulting from the application of the operation (OPR) to a same one data of one of the first and second input sets (PX1, PX2) and to each of the data in the other of the first and second input sets, the method comprising selecting a row or a column (PR3) of the output set comprising the output data (X1⊕X2).

3. The method of claim 1 or 2, wherein the output set (PR2) is written in a memory area (PR4) comprising two data lines, one of the two data lines comprising data resulting from the application of the operation (OPR) to the first input data (X1) and to each of the data in the second input set (PX2), or resulting from the application of the operation to the second input data (X2) and to each of the data in the first input set (PX1).

4. The method of claim 3, wherein:

   the rows or columns of the output set (PR2) are randomly or alternately written in the two data lines of the memory area (PR4), and when a row or column of the output set comprising the output data (X1⊕X2) at a known position is written in one of the two data lines of the memory area, the other of the two data lines of the memory area receives all the data of the output set subsequently computed, the method comprising selecting as output of the operation (OPR) the data line of the memory area comprising the output data, or
   the rows or columns of the output set (PR2) are combined by XOR operations with previous data written in one of the two data lines of the memory area, except one row or column of the output set, which is written in the other of the two data lines of the memory area, an error being detected when the two data lines of the memory area are not identical.

5. The method of one of claims 1 to 4, wherein the operation is an Exclusive OR.

6. The method of one of claims 1 to 5, wherein the computations of the data in the output set (PR2) are performed in a random order.

7. The method of one of claims 1 to 6, comprising detecting in a column or a row of the output set (PR2) a data having a number of occurrences different from a number of occurrences of other data in the output set, an error being detected when two data with different numbers of occurrences are found in a column or a row of the output set.

8. The method of claim 7, wherein the detection of two identical data in a row or column of the output set (PR2) comprises combining by Exclusive OR (XOR) operations all the data in the row or column of the output set, and comparing the result of the XOR operations with zero.

9. The method of one of claims 1 to 8, wherein the first input set (PX1) is generated by combining by Exclusive OR operations the first input data (X1) once with each possible values of a mask having a same bit number as the first input value.

**10.** The method of one of claims 1 to 9, comprising:

concatenating a number of data of the first input set (PX1) to generate a first input word,
concatenating a same number of data of the second input set (PX2) to generate a second input word, and
applying the operation (OPR) to the first and second input words.

**11.** A method for encrypting or decrypting an input data (X1), comprising:

applying Exclusive OR (XOR) operations to each byte of the input data and to a corresponding byte of a key (RK0) derived from a secret key (SK) and providing for each byte of the input data a first output set (IPR10) of output bytes comprising a same number of occurrences of all possible values of a byte including the result of the operation applied to the byte of the input data,
applying a substitution operation to each byte of each first output set, comprising selecting a byte in a substitution table as a function of the byte in the first output set, and providing for each first output set a second output set (IPR2j) comprising all bytes selected in the substitution table as a function of a byte in the first output set, and
applying to the second output sets a permutation operation (MXC) comprising combining together by XOR operations bytes of the second output sets or multiples thereof, the XOR operations being performed according to the method of one of claims 1 to 10.

**12.** The method of claim 10, wherein the first output sets (IPR10) are generated by:

generating an input set (PX1) for each byte of the input data (X1) by combining by XOR operations the byte of the input data once with all possible values of a mask byte (IRN), and by combining each byte of the derived key (RKj) by the XOR operations with each byte of a corresponding one in the input sets, or
generating a key set for each byte of the derived key by combining by XOR operations the byte of the derived key once with all possible values of the mask byte, and by combining each byte of the input data by the XOR operation with each byte of a corresponding one in the key sets, or
combining by XOR operations each byte of the input data with a corresponding byte of the derived key to generate output bytes, and by combining each output byte by XOR operations once with all possible values of the mask byte.

**13.** A circuit (CT1) comprising a processor (PRC) and configured to implement the method according to one of claims 1 to 12.

**14.** The circuit of claim 13, comprising a coprocessor (CP2).

**15.** A device comprising a circuit according to claim 13 or 14, arranged on a medium (HD).

**16.** A computer program product loadable into a computer memory and comprising code portions which when executed by a computer configure the computer to carry out the steps of the method according to one of claims 1 to 12.

**Patentansprüche**

**1.** Verfahren zum Ausführen einer Operation (OPR) durch eine Schaltung (CT1), wodurch erste Eingabedaten (X1Vn1) mit zweiten Eingabedaten (X2Vn2) kombiniert werden, wobei das Verfahren Folgendes umfasst:

Durchführen der Operation an den gesamten möglichen Datenpaaren (X1Vi-X2Vj), die aus Daten (X1V1-X1Vw) eines ersten Eingabesatzes (PX1) und den zweiten Eingabedaten bestehen, wobei der erste Eingabesatz (PX1) die ersten Eingabedaten umfasst (X1Vn1), wobei alle Daten in dem ersten Eingabesatz wenigstens ein Wort umfassen, wobei die Wörter in dem ersten Eingabesatz eine gleiche Größe aufweisen und eine erste Wortteilmenge ausbilden, die ein einzelnes Wort aus allen Daten des ersten Eingabesatzes und eine gleiche Anzahl von Auftritten der gesamten möglichen Werte der Wörter umfasst, wobei die Anwendung der Operation auf jedes Datenpaar einen Ausgabesatz erzeugt, der Ausgabedaten (RVn1.n2) umfasst, die aus der Anwendung der Operation auf die ersten und zweiten Eingabedaten resultieren, und eine Position in dem Ausgabesatz aufweist, die aus der Schaltung bekannt ist,
wobei die zweiten Eingabedaten (X2Vn2) zu einem zweiten Eingabesatz (PX2) gehören, wobei alle Daten in dem zweiten Eingabesatz wenigstens ein Wort umfassen, wobei die Wörter in dem zweiten Eingabesatz eine gleiche Größe aufweisen und eine zweite Wortteilmenge ausbilden, die ein einzelnes Wort aus allen Daten des zweiten Eingabesatzes und eine gleiche Anzahl von Auftritten der gesamten möglichen Werte der Wörter umfasst, wobei die Operation an den gesamten möglichen Datenpaaren durchgeführt wird, die aus Daten aus dem ersten Eingabesatz und Daten aus dem zweiten Eingabesatz bestehen, wobei der Ausgabesatz (PR2) die gesamten Daten (RV1.1-RVw.w) umfasst, die aus der Anwendung der Operation auf eines der Datenpaare resultieren.

2. Verfahren nach Anspruch 1, wobei die Daten in dem Ausgabesatz (PR2) in Zeilen und Spalten angeordnet sind, wobei die Daten einer Zeile oder Spalte aus der Anwendung der Operation (OPR) auf die gleichen Daten des ersten oder des zweiten Eingabesatzes (PX1, PX2) und auf alle der Daten in dem anderen des ersten oder des zweiten Eingabesatzes resultieren, wobei das Verfahren ein Auswählen einer Zeile oder einer Spalte (PR3) des Ausgabesatzes umfasst, der die Ausgabedaten (X1 ⊕ X2) umfasst.

3. Verfahren nach Anspruch 1 oder 2, wobei der Ausgabesatz (PR2) in einen Speicherbereich (PR4) geschrieben wird, der zwei Datenleitungen umfasst, wobei eine der zwei Datenleitungen Daten umfasst, die aus der Anwendung der Operation (OPR) auf die ersten Eingabedaten (X1) und auf alle der Daten in dem zweiten Eingabesatz (PX2) resultieren oder aus der Anwendung der Operation auf die zweiten Eingabedaten (X2) und auf alle der Daten in dem ersten Eingabesatz (PX1) resultieren.

4. Verfahren nach Anspruch 3, wobei:

die Zeilen oder Spalten des Ausgabesatzes (PR2) zufällig oder abwechselnd in die zwei Datenleitungen des Speicherbereichs (PR4) geschrieben werden, und wenn eine Zeile oder Spalte des Ausgabesatzes, der die Ausgabedaten (X1 ⊕ X2) an einer bekannten Position umfasst, in eine der zwei Datenleitungen des Speicherbereichs geschrieben wird, die andere der zwei Datenleitungen des Speicherbereichs die gesamten Daten des nachfolgend berechneten Ausgabesatzes empfängt, wobei das Verfahren das Auswählen, als eine Ausgabe der Operation (OPR), der Datenleitung des Speicherbereichs umfasst, der die Ausgabedaten umfasst, oder die Zeilen oder Spalten des Ausgabesatzes (PR2) durch XOR-Operationen mit vorherigen Daten kombiniert werden, die in eine der zwei Datenleitungen des Speicherbereichs geschrieben werden, mit Ausnahme einer Zeile oder Spalte des Ausgabesatzes, die in die andere der zwei Datenleitungen des Speicherbereichs geschrieben wird, wobei ein Fehler erfasst wird, wenn die zwei Datenleitungen des Speicherbereichs nicht identisch sind.

5. Verfahren nach einem der Ansprüche 1 bis 4, wobei die Operation eine Exklusive OR ist.

6. Verfahren nach einem der Ansprüche 1 bis 5, wobei die Berechnungen der Daten in dem Ausgabesatz (PR2) in einer zufälligen Reihenfolge durchgeführt werden.

7. Verfahren nach einem der Ansprüche 1 bis 6, das das Erfassen, in einer Spalte oder einer Zeile des Ausgabesatzes (PR2), von Daten umfasst, die eine Anzahl von Auftritten aufweist, die sich von einer Anzahl von Auftritten anderer Daten in dem Ausgabesatz unterscheiden, wobei ein Fehler erfasst wird, wenn zwei Daten mit unterschiedlicher Anzahl von Auftritten in einer Spalte oder Zeile des Ausgabesatzes gefunden werden.

8. Verfahren nach Anspruch 7, wobei das Erfassen von zwei identischen Daten in einer Zeile oder Spalte des Ausgabesatzes (PR2) das Kombinieren, durch Exklusive OR(XOR)-Operationen, der gesamten Daten in der Zeile oder Spalte des Ausgabesatzes und das Vergleichen des Ergebnisses der XOR-Operationen mit Null umfasst.

9. Verfahren nach einem der Ansprüche 1 bis 8, wobei der erste Eingabesatz (PX1) durch einmaliges Kombinieren, durch Exklusive OR-Operationen, der ersten Eingabedaten (X1) mit jedem möglichen Wert einer Maske erzeugt wird, der eine gleiche Bitanzahl wie der erste Eingabewert aufweist.

10. Verfahren nach einem der Ansprüche 1 bis 9, das Folgendes umfasst:

Verketten einer Anzahl von Daten des ersten Eingabesatzes (PX1), um ein erstes Eingabewort zu erzeugen, Verketten einer gleichen Anzahl von Daten des zweiten Eingabesatzes (PX2), um ein zweites Eingabewort zu erzeugen, und
Anwenden der Operation (OPR) auf das erste und das zweite Eingabewort.

**11.** Verfahren zum Verschlüsseln oder Entschlüsseln von Eingabedaten (X1), das Folgendes umfasst:

Anwenden von Exklusive OR(XOR)-Operationen auf jedes Byte der Eingabedaten und auf ein entsprechendes Byte eines Schlüssels (RK0), der von einem geheimen Schlüssel (SK) abgeleitet ist, und Bereitstellen für jedes Byte der Eingabedaten eines ersten Ausgabesatzes (IPR10) von Ausgabebytes, die eine gleiche Anzahl von Auftritten der gesamten möglichen Werte eines Bytes umfassen, einschließlich des Ergebnisses der Operation, die auf das Byte der Eingabedaten angewendet wird,

Anwenden einer Substitutionsoperation auf jedes Byte jedes ersten Ausgabesatzes, das das Auswählen eines Bytes in einer Substitutionstabelle in Abhängigkeit des Bytes in dem ersten Ausgabesatz und das Bereitstellen eines zweiten Ausgabesatzes (IPR2j) für jeden ersten Ausgabesatz umfasst, der die gesamten Bytes umfasst, die in der Substitutionstabelle in Abhängigkeit eines Bytes in dem ersten Ausgabesatz ausgewählt werden, und

Anwenden, auf die zweiten Ausgabesätze, einer Permutationsoperation (MXC), die ein Kombinieren, durch XOR-Operationen, von Bytes der zweiten Ausgabesätze oder Vielfachen davon umfasst, wobei die XOR-Operationen gemäß dem Verfahren nach einem der Ansprüche 1 bis 10 durchgeführt werden.

**12.** Verfahren nach Anspruch 10, wobei die ersten Ausgabesätze (IPR10) durch Folgendes erzeugt werden:

Erzeugen eines Eingabesatzes (PX1) für jedes Byte der Eingabedaten (X1) durch einmaliges Kombinieren, durch XOR-Operationen, des Bytes der Eingabedaten mit den gesamten möglichen Werten eines Maskenbytes (IRN) und durch Kombinieren jedes Bytes des abgeleiteten Schlüssels (RKj) durch die XOR-Operationen mit jedem Byte eines entsprechenden einen in den Eingabesätzen, oder

Erzeugen eines Schlüsselsatzes für jedes Byte des abgeleiteten Schlüssels durch einmaliges Kombinieren, durch XOR-Operationen, des Bytes des abgeleiteten Schlüssels mit den gesamten möglichen Werten des Maskenbytes und durch Kombinieren jedes Bytes der Eingabedaten durch die XOR-Operation mit jedem Byte eines entsprechenden einen in den Schlüsselsätzen, oder

Kombinieren, durch XOR-Operationen, jedes Bytes der Eingabedaten mit einem entsprechenden Byte des abgeleiteten Schlüssels, um Ausgabebytes zu erzeugen, und durch einmaliges Kombinieren jedes Ausgabebytes durch XOR-Operationen mit den gesamten möglichen Werten des Maskenbytes.

**13.** Schaltung (CT1), die einen Prozessor (PRC) umfasst und konfiguriert ist, um das Verfahren nach einem der Ansprüche 1 bis 12 zu implementieren.

**14.** Schaltung nach Anspruch 13, die einen Coprozessor (CP2) umfasst.

**15.** Vorrichtung, die eine Schaltung nach Anspruch 13 oder 14 umfasst, die auf einem Medium (HD) angeordnet ist.

**16.** Computerprogrammprodukt, das in einen Computerspeicher geladen werden kann und Codeabschnitte umfasst, die, wenn sie durch einen Computer ausgeführt werden, den Computer konfigurieren, um die Schritte des Verfahrens nach einem der Ansprüche 1 bis 12 vorzunehmen.

**Revendications**

**1.** Procédé pour exécuter par un circuit (CT1) une opération (OPR) par laquelle une première donnée d'entrée (X1Vn1) est combinée avec une deuxième donnée d'entrée (X2Vn2), le procédé comprenant les étapes suivantes :

exécuter l'opération sur toutes les paires de données possibles (X1Vi-X2Vj) constituées d'une donnée (X1V1-X1Vw) d'un premier ensemble d'entrées (PX1) et de la deuxième donnée d'entrée, le premier ensemble d'entrées (PX1) comprenant la première donnée d'entrée (X1Vn1), chaque donnée du premier ensemble d'entrées comprenant au moins un mot, les mots dans le premier ensemble d'entrées ayant une même taille et formant un premier sous-ensemble de mots comprenant un seul mot de chaque donnée du premier ensemble d'entrées et un même nombre d'occurrences de toutes les valeurs possibles des mots, l'application de l'opération à chaque paire de données générant un ensemble de sorties comprenant des données de sortie (RVn1.n2) résultant de l'application de l'opération aux première et deuxième données d'entrée, et ayant une position dans l'ensemble de sorties qui est connue du circuit,

dans lequel la deuxième donnée d'entrée (X2Vn2) appartient à un deuxième ensemble d'entrées (PX2), chaque donnée dans le deuxième ensemble d'entrées comprenant au moins un mot, les mots dans le deuxième ensemble d'entrées ayant une même taille et formant un deuxième sous-ensemble de mots comprenant un seul mot de chaque donnée du deuxième ensemble d'entrées et un même nombre d'occurrences de toutes les valeurs possibles des mots, l'opération étant effectuée sur toutes les paires de données possibles consistant en une donnée du premier ensemble d'entrées et une donnée du deuxième ensemble d'entrées, l'ensemble de sorties (PR2) comprenant toutes les données (RV1.1-RVw.w) résultant de l'application de l'opération à l'une des paires de données.

2. Procédé selon la revendication 1, dans lequel les données dans l'ensemble de sorties (PR2) sont organisées en rangées et en colonnes, les données d'une rangée ou d'une colonne résultant de l'application de l'opération (OPR) à une même donnée de l'un des premier et deuxième ensembles d'entrées (PX1, PX2) et à chacune des données dans l'autre des premier et deuxième ensembles d'entrées, le procédé comprenant la sélection d'une rangée ou d'une colonne (PR3) de l'ensemble de sorties comprenant les données de sortie (X1⊕X2).

3. Procédé selon la revendication 1 ou 2, dans lequel l'ensemble de sorties (PR2) est écrit dans une zone mémoire (PR4) comprenant deux lignes de données, l'une des deux lignes de données comprenant des données résultant de l'application de l'opération (OPR) à la première donnée d'entrée (X1) et à chacune des données du deuxième ensemble d'entrées (PX2), ou résultant de l'application de l'opération à la deuxième donnée d'entrée (X2) et à chacune des données du premier ensemble d'entrées (PX1).

4. Procédé selon la revendication 3, dans lequel :

les lignes ou les colonnes de l'ensemble de sorties (PR2) sont écrites de manière aléatoire ou alternée dans les deux lignes de données de la zone mémoire (PR4), et lorsqu'une ligne ou une colonne de l'ensemble de sorties comprenant les données de sortie (X1⊕X2) à une position connue est écrite dans l'une des deux lignes de données de la zone mémoire, l'autre des deux lignes de données de la zone mémoire reçoit toutes les données de l'ensemble de sorties calculé par la suite, le procédé comprenant la sélection en tant que sortie de l'opération (OPR) de la ligne de données de la zone mémoire comprenant les données de sortie, ou les lignes ou les colonnes de l'ensemble de sorties (PR2) sont combinées par des opérations XOR avec des données précédemment écrites dans l'une des deux lignes de données de la zone mémoire, sauf une ligne ou une colonne de l'ensemble de sorties qui est écrite dans l'autre des deux lignes de données de la zone mémoire, une erreur étant détecté lorsque les deux lignes de données de la zone mémoire ne sont pas identiques.

5. Procédé selon l'une des revendications 1 à 4, dans lequel l'opération est un OU exclusif.

6. Procédé selon l'une des revendications 1 à 5, dans lequel les calculs des données de l'ensemble de sorties (PR2) sont effectués dans un ordre aléatoire.

7. Procédé selon l'une des revendications 1 à 6, comprenant la détection dans une colonne ou une ligne de l'ensemble de sorties (PR2) d'une donnée ayant un nombre d'occurrences différent d'un nombre d'occurrences d'autres données dans l'ensemble de sorties, une erreur étant détectée lorsque deux données ayant des nombres d'occurrences différents sont trouvées dans une colonne ou une ligne de l'ensemble de sorties.

8. Procédé selon la revendication 7, dans lequel la détection de deux données identiques dans une ligne ou une colonne de l'ensemble de sorties (PR2) comprend la combinaison par des opérations OU exclusif (XOR) de toutes les données dans la ligne ou la colonne de l'ensemble de sorties, et la comparaison du résultat des opérations XOR avec zéro.

9. Procédé selon l'une des revendications 1 à 8, dans lequel le premier ensemble d'entrées (PX1) est généré en combinant par des opérations OU exclusif la première donnée d'entrée (X1) une fois avec chaque valeur possible d'un masque ayant un même nombre de bits que la première valeur d'entrée.

10. Procédé selon l'une des revendications 1 à 9, comprenant les étapes suivantes :

concaténer un nombre de données du premier ensemble d'entrées (PX1) pour générer un premier mot d'entrée, concaténer un même nombre de données du deuxième ensemble d'entrées (PX2) pour générer un deuxième mot d'entrée, et appliquer l'opération (OPR) aux premier et deuxième mots d'entrée.

11. Procédé de cryptage ou de décryptage d'une donnée d'entrée (X1), comprenant les étapes suivantes :

appliquer des opérations OU exclusif (XOR) à chaque octet des données d'entrée et à un octet correspondant d'une clé (RK0) dérivée d'une clé secrète (SK) et fournir pour chaque octet des données d'entrée un premier ensemble de sorties (IPR10) d'octets de sortie comprenant un même nombre d'occurrences de toutes les valeurs possibles d'un octet incluant le résultat de l'opération appliquée à l'octet des données d'entrée, appliquer une opération de substitution à chaque octet de chaque premier ensemble de sorties, comprenant la sélection d'un octet dans une table de substitution en fonction de l'octet dans le premier ensemble de sorties, et fournir pour chaque premier ensemble de sorties un deuxième ensemble de sorties (IPR2j) comprenant tous les octets sélectionnés dans la table de substitution en fonction d'un octet dans le premier ensemble de sorties, et appliquer au deuxième ensemble de sorties une opération de permutation (MXC) consistant à combiner ensemble par des opérations XOR des octets du deuxième ensemble de sorties ou des multiples de ceux-ci, les opérations XOR étant réalisées selon le procédé de l'une des revendications 1 à 10.

12. Procédé selon la revendication 10, dans lequel le premier ensemble de sorties (IPR10) est généré par les étapes suivantes :

générer un ensemble d'entrées (PX1) pour chaque octet des données d'entrée (X1) en combinant par des opérations XOR l'octet des données d'entrée une fois avec toutes les valeurs possibles d'un octet de masque (IRN), et en combinant chaque octet de la clé dérivée (RKj) par des opérations XOR avec chaque octet d'une clé correspondante dans les ensembles d'entrées, ou

générer un ensemble de clés pour chaque octet de la clé dérivée en combinant par des opérations XOR l'octet de la clé dérivée une fois avec toutes les valeurs possibles de l'octet de masque, et en combinant chaque octet des données d'entrée par l'opération XOR avec chaque octet d'un octet correspondant des ensembles de clés, ou combiner par des opérations XOR chaque octet des données d'entrée avec un octet correspondant de la clé dérivée pour générer des octets de sortie, et en combinant chaque octet de sortie par des opérations XOR une fois avec toutes les valeurs possibles de l'octet de masque.

13. Circuit (CT1) comprenant un processeur (PRC) et configuré pour mettre en œuvre le procédé selon l'une des revendications 1 à 12.

14. Circuit selon la revendication 13, comprenant un coprocesseur (CP2).

15. Dispositif comprenant un circuit selon la revendication 13 ou 14, disposé sur un support (HD).

16. Produit programme d'ordinateur pouvant être chargé dans une mémoire d'ordinateur et comprenant des parties de code qui, lorsqu'elles sont exécutées par l'ordinateur, configurent l'ordinateur pour exécuter les étapes du procédé selon l'une des revendications 1 à 12.

Fig. 1

S11 — RN = RND(0,W-1)

S12 — i=0

IRN = i ⊕ RN — S13

PR[i] = OPR(X,KY⊕IRN) — S14

i += 1 — S15

N    i > W-1 ?    — S16

Y

S17 — Ret. PR[n], n / IRN[n]=0

Fig. 2

Fig. 3

Fig. 4

Fig. 5

Fig. 6

Fig. 7

X3

XG4

MXC

| X0 | X4 | X8 | X12 |
|---|---|---|---|
| X1 | X5 | X9 | X13 |
| X2 | X6 | X10 | X14 |
| X3 | X7 | X11 | X15 |

| 2 | 3 | 1 | 1 |
|---|---|---|---|
| 1 | 2 | 3 | 1 |
| 1 | 1 | 2 | 3 |
| 3 | 1 | 1 | 2 |

MC

TR

| $2X_0 \oplus 3X_1 \oplus X_2 \oplus X_3$ | $2X_4 \oplus 3X_5 \oplus X_6 \oplus X_7$ | $2X_8 \oplus 3X_9 \oplus X_{10} \oplus X_{11}$ | $2X_{12} \oplus 3X_{13} \oplus X_{14} \oplus X_{15}$ |
|---|---|---|---|
| $X_0 \oplus 2X_1 \oplus 3X_2 \oplus X_3$ | $X_4 \oplus 2X_5 \oplus 3X_6 \oplus X_7$ | $X_8 \oplus 2X_9 \oplus 3X_{10} \oplus X_{11}$ | $X_{12} \oplus 2X_{13} \oplus 3X_{14} \oplus X_{15}$ |
| $X_0 \oplus X_1 \oplus 2X_2 \oplus 3X_3$ | $X_4 \oplus X_5 \oplus 2X_6 \oplus 3X_7$ | $X_8 \oplus X_9 \oplus 2X_{10} \oplus 3X_{11}$ | $X_{12} \oplus X_{13} \oplus 2X_{14} \oplus 3X_{15}$ |
| $3X_0 \oplus X_1 \oplus X_2 \oplus 2X_3$ | $3X_4 \oplus X_5 \oplus X_6 \oplus 2X_7$ | $3X_8 \oplus X_9 \oplus X_{10} \oplus 2X_{11}$ | $3X_{12} \oplus X_{13} \oplus X_{14} \oplus 2X_{15}$ |

## Fig. 8

IPR3j

R3Vw

XG4

MXC

| X0 | X4 | X8 | X12 |
|---|---|---|---|
| X1 | X5 | X9 | X13 |
| X2 | X6 | X10 | X14 |
| X3 | X7 | X11 | X15 |

| 2 | 3 | 1 | 1 |
|---|---|---|---|
| 1 | 2 | 3 | 1 |
| 1 | 1 | 2 | 3 |
| 3 | 1 | 1 | 2 |

R3V1

MC

TR

| $2X_0 \oplus 3X_1 \oplus X_2 \oplus X_3$ | $2X_4 \oplus 3X_5 \oplus X_6 \oplus X_7$ | $2X_8 \oplus 3X_9 \oplus X_{10} \oplus X_{11}$ | $2X_{12} \oplus 3X_{13} \oplus X_{14} \oplus X_{15}$ |
|---|---|---|---|
| $X_0 \oplus 2X_1 \oplus 3X_2 \oplus X_3$ | $X_4 \oplus 2X_5 \oplus 3X_6 \oplus X_7$ | $X_8 \oplus 2X_9 \oplus 3X_{10} \oplus X_{11}$ | $X_{12} \oplus 2X_{13} \oplus 3X_{14} \oplus X_{15}$ |
| $X_0 \oplus X_1 \oplus 2X_2 \oplus 3X_3$ | $X_4 \oplus X_5 \oplus 2X_6 \oplus 3X_7$ | $X_8 \oplus X_9 \oplus 2X_{10} \oplus 3X_{11}$ | $X_{12} \oplus X_{13} \oplus 2X_{14} \oplus 3X_{15}$ |
| $3X_0 \oplus X_1 \oplus X_2 \oplus 2X_3$ | $3X_4 \oplus X_5 \oplus X_6 \oplus 2X_7$ | $3X_8 \oplus X_9 \oplus X_{10} \oplus 2X_{11}$ | $3X_{12} \oplus X_{13} \oplus X_{14} \oplus 2X_{15}$ |

R4Vn.1

R4Vn.w

## Fig. 9

IPR4j

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- FR 1651443
- US 2006056622 A
- US 2009074181 A
- US 2011055591 A

### Non-patent literature cited in the description

- *Advanced Encryption Standard FIPS PUB 197,* 26 November 2001
- Timing attacks on implementations of Diffie-Hellman, RSA, DSS, and other systems. **P. C. KOCHER.** Advances in Cryptology - CRYPTO '96. Springer, 1996, vol. 1109, 104-113
- Differential Power Analysis. **P. C. KOCHER ; J. JAFFE ; B. JUN.** Advances in Cryptology - CRYPTO '99. Springer, 1999, vol. 1666, 388-397
- Correlation Power Analysis with a Leakage Model. **E. BRIER ; C. CLAVIER ; F. OLIVIER.** Cryptographic Hardware and Embedded Systems - CHES 2004. Springer, 2004, vol. 3156, 16-29
- ElectroMagnetic Analysis (EMA): Measures and Counter-measures for Smart Cards. **J.-J. QUISQUATER.** Smart Card Programming and Security. Springer, 2001, vol. 2140, 200-210
- Template Attacks. **S. CHARI ; J. R. RAO ; P. ROHATGI.** CHES 2002. LNCS. Springer, 2003, vol. 2523, 172-186
- Mutual Information Analysis. **B. GIERLICHS ; L. BATINA ; P. TUYLS ; B. PRENEEL.** CHES 2008. Springer, 2008, vol. 5154, 426-442
- **DAESUNG KWON et al.** New Block Cipher: ARIA. *Information Security and Cryptology - ICISC 2003,* vol. 2971, 432-445